# FASCICULE DE BREVET EUROPEEN

(11) **EP 0 643 513 B1**
(45) Date de publication et mention de la délivrance du brevet: **31.05.2000**
(21) Numéro de dépôt: 94402022.1
(22) Date de dépôt: 12.09.1994
(51) Int. Cl.: H04L 9/32

(54) **Procédé de vérification de signatures pour un système de communications**
Verfahren zur Verifizierung von Unterschriften in einem Kommunikationssystem
Method for verifying signatures in a communication system

(30) Priorité: 15.09.1993 US 122716
(43) Date de publication de la demande: 15.03.1995
(73) Titulaire: GEMPLUS DEVELOPPEMENT, F-13420 Gemenos (FR)
(72) Inventeur: Naccache, David, Cabinet Ballot-Schmit, F-94230 Cachan (FR); M'Raihi, David, Cabinet Ballot-Schmit, F-94230 Cachan (FR)

(56) Documents cités:
- EP-A- 0 356 127
- WO-A-93/03562

## Description

La présente invention se rapporte à un système pour améliorer l'efficacité de calcul de l'Algorithme de Signature Numérique (DSA), proposé par le US National Institute of standards and Technology (NIST) dans "A Proposed Federal Information Processing Standard for Digital Signature Standard (DSS)", Federal Register Announcement, 30 août 1991, pages 42980 à 42982, également connu par la publication de la demande de brevet WO 93/03562. Cela est accompli en autorisant une vérification par lots rapide et simultanée d'un grand nombre de signatures dans une seule opération. Cette invention est utilisée pour améliorer les transactions, économiques ou non, entre des personnes par l'utilisation de cartes à puce.
Bien que l'idée d'insérer une puce dans une carte en plastique soit relativement vieille (les premiers brevets ont maintenant dix-sept ans), les applications pratiques ne sont seulement apparues que depuis quelques années à cause de certaines limitations de calcul des puces. Les progrès dans les domaines de capacité de stockage, de sécurité et de technologie de circuit (par exemple EEPROM) ont rapidement conduit à de nouvelles générations de cartes et à des applications plus ambitieuses, telles que la récente apparition du Standard de Signature Numérique américain, qui donne elle-même un sens à de nombreux nouveaux types de transactions.

Ce DSA a été proposé par le US National Institute of Standards and Technology (NIST) pour apporter une base appropriée aux applications demandant une signature numérique plutôt qu'une signature écrite. La signature numérique DSA est une paire "r et s" de grands nombres représentés dans un ordinateur comme des chaînes de chiffres binaires. La signature numérique est calculée en utilisant un ensemble de règles (c'est-à-dire le DSA) et un ensemble de paramètres, de façon à ce que l'identité du signataire et l'intégrité des données puissent être vérifiées. Le DSA procure l'aptitude à produire et à vérifier les signatures.

La production de signature utilise une clé privée "x" pour produire une signature numérique. La vérification de signature utilise une clé publique "y" qui correspond à la clé privée, mais qui n'est pas la même. Chaque utilisateur possède une paire de clés privée et publique. Les clés publiques sont supposées être connues de tous alors que les clés privées ne sont jamais divulguées. N'importe qui peut vérifier la signature d'un utilisateur en utilisant la clé publique de cet utilisateur. La production de signature peut seulement être réalisée au moyen de la clé privée de l'utilisateur.

Les paramètres du DSA sont les suivants :
1 - un premier module p où 2^{L-1} < p < 2^{L} pour 512 ≤ L ≤ 1024 et $\text{L = 64α}$ pour un α quelconque. En pratique, p est une chaîne de L bits, par exemple 512 bits.
2 - un second module q tel que 2¹⁵⁹ < q < 2¹⁶⁰ et tel que p-1 soit un multiple de q. En pratique, q est une chaîne de 160 bits. En tout cas, il pourrait être différent.
3 - un nombre g, d'ordre q modulo p, tel que : ${\text{g = h}}^{\text{(p-1)/q}} \text{modulo p}$, où h est un entier quelconque tel que 1 < h < p-1 et où g est supérieur à 1.
4 - un nombre x, défini de manière aléatoire ou pseudo-aléatoire et qui est la clé privée.
5 - un nombre y, défini par la relation ${\text{y = g}}^{\text{x}} \text{modulo p}$, qui est la clé publique.
6 - un nombre k produit de manière aléatoire ou pseudo-aléatoire tel que 0 < k < q.

Les entiers p, q et g sont des paramètres du système et peuvent être publics et/ou communs à un groupe d'utilisateurs. Les clés privée et publique de l'utilisateur sont respectivement x et y. Les paramètres x et k sont seulement utilisés pour la production de signature et doivent être gardés secrets. Le paramètre k doit être refabriqué pour chaque signature. Le paramètre y est partagé par de nombreux groupes d'utilisateurs.

Afin de signer un message m (nouvelle valeur de présentation obtenue par une fonction de hachage d'un fichier binaire initial M), un dispositif de signature calcule la signature "r et s". Une nouvelle valeur de présentation m d'un fichier initial M est une chaîne de binaires réagencée de certains (ou de tous) les binaires de M. En pratique, un dispositif de signature est un microprocesseur de la carte à puce de l'utilisateur qui effectue une opération programmée. Cette opération peut être effectuée automatiquement à la fin de l'édition du fichier initial M ou du message m. Elle peut également être effectuée, à volonté, après cette édition. Le calcul fait pour cette signature, qui est particulièrement décrite dans KNUTH, volume 2, Seminumerical Algorithmn, s'effectue comme suit :${\text{r = (g}}^{\text{k}} \text{modulo p) modulo q, et s = ((m + xr) / (k)) modulo q.}$

La première partie r de la signature dépend du système utilisé par g p q et k, tandis que s dépend du message m et de la clé privée x, et aussi de q r k.

Dans cette signature, une division par k est faite modulo q (c'est-à-dire que 1/k est le nombre k' tel que kk' ≡ 1 modulo q). Par exemple, si q = 5 et k = 3 alors 1/k modulo 5 = 2, en fait 1/3 = 2 modulo 5 puisque 3 x 2 = 6 = 1 modulo 5.

Après avoir vérifié que r est différent de 0 et de s, comme expliqué dans la description du DSA, la signature "r et s" est prête. Cette signature authentifie que le message m a été fourni par le propriétaire de la carte à puce avec sa clé privée correcte "x". Elle est ensuite envoyée, en même temps que le message m, à une autorité de vérification.

Cette autorité de vérification effectue une vérification de ce qu'elle a reçu avec un dispositif de vérification. Un dispositif de vérification, qui comprend, en pratique, un processeur exécutant un programme de vérification, effectue une vérification par lots. Lorsque cette vérification par lots est faite, le message m est authentifié, il est reconnu que ce message est fourni par un utilisateur autorisé, et les conséquences économiques de ce message peuvent ensuite être validées. Cela signifie que l'autorité de vérification peut effectuer une action relative au message m, cela signifie, par exemple, l'autorisation d'une transaction entre l'utilisateur de la carte à puce et un marchand et l'exécution des transferts de fonds correspondants ou même l'autorisation d'une transaction entre cet utilisateur et l'autorité de vérification.

Il existe dans l'Art Antérieur des méthodes de traitement cryptographiques par lots (par exemple), mais aucune de ces méthodes n'adresse en particulier l'algorithme DSS.

La vérification par lots DSS permet à un dispositif de vérification de retarder la vérification d'un ensemble de signatures DSS jusqu'à ce qu'il décide qu'il a une quantité assez grande de ces signatures et donc de les vérifier toutes en une fois.

Une approche de ce type est avantageuse dans bien des situations pratiques. Par exemple, les banques envoient et reçoivent des ordres de transaction toute la journée mais les exécutent (compensation interbancaire) pendant la nuit. Les abonnés à la Télévision Payante (Pay-TV) achètent des droits de visualisation à partir d'un dispositif de fourniture de programmes qui doit vérifier la validité individuelle de chaque ordre d'achat avant de télécharger les droits par voie hertzienne. Des situations similaires sont fréquemment rencontrées dans de nombreuses autres transactions électroniques.

Plus généralement, la vérification par lots de signature est utile toutes les fois qu'un certain laps de temps, qui permet une opération inverse, une censure ou une action d'opposition, sépare la signature de sa conséquence (classiquement la délivrance de marchandises ou de services à l'utilisateur signataire).

Le dispositif de vérification calcule :
1 - $\text{w = 1/s modulo q}$ (puisqu'il connaît la valeur partagée de manière publique q et qu'il reçoit s). Existerait-t-il de nombreux groupes d'utilisateurs ayant différents ensembles de nombres p q g, qu'ils seraient envoyés au dispositif de vérification au même moment que le message m et que la signature r et s.
2 - ${\text{u}}_{\text{1}} \text{= m w modulo q}$ (puisqu'il connaît le m reçu, le q partagé et le w calculé précédemment).
3 - ${\text{u}}_{\text{2}} \text{= r w modulo q}$ (puisqu'il connaît le r reçu, le q partagé et le w calculé précédemment).
4 - ${\text{v = (g}}^{\text{u}} {\text{1 . y}}^{\text{u}} \text{2 modulo p) modulo q}$ (puisque u₁ et u₂ sont précédemment calculés et que y est la clé publique pour le groupe d'utilisateurs).

Ensuite, il vérifie si v et r concordent pour accepter ou rejeter la signature. Ceci est trop long lorsque de trop nombreuses vérifications doivent être faites.

Ainsi, l'invention a pour objet de décrire un système au moyen duquel un ensemble de dispositifs de signature A1, A2, ... tels que, à proprement parler, des cartes "intelligentes" à microprocesseur, des badges ou des clés électroniques, va transmettre des signatures DSS à un appareil de vérification centralisé B (par exemple un ordinateur personnel, ou un serveur distant) qui va vérifier toutes les signatures par une seule et unique opération de vérification.

L'invention concerne un procédé de vérification dans un système comprenant n dispositifs communiquants Ai connectés à un dispositif de vérification centralisé B au moyen d'interfaces de communication,
- chaque dispositif communiquant Ai
   - possède des moyens de traitement de données, des moyens de communication, des moyens de mémorisation et des moyens de production de nombres aléatoires ou pseudo-aléatoires,
   - exécute un algorithme de signature numérique et produit un signal de signature numérique, et
   - transmet un signal de signature numérique au dispositif de vérification centralisé B,
- le dispositif de vérification centralisé B
   - possède des moyens de traitement de données, des moyens de communication et des moyens de mémorisation,
   - vérifie, dans un traitement par lots, en même temps, un ensemble de signaux de signature numérique, une fois que tous ces signaux de signature numérique ont été reçus, en
   - effectuant, premièrement, des traitements sur les signaux de signature numérique reçus et en
   - calculant, deuxièmement, sur la base des résultats des traitements, un calcul de vérification.

Dans cette configuration, on suppose que tous les utilisateurs i, possédant des dispositifs communiquants Ai, utilisent le même DSS modulo p et q et le même nombre g, mais possèdent différentes paires de clés (xᵢ, yᵢ) et qu'ils envoient chaque signature DSS tᵢ à vérifier. Le dispositif de vérification reçoit ainsi 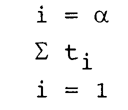 signatures DSS. On indiquera par {r_{i,j}, s_{i,j}} les signatures DSS des messages {m_{i,j}}, où m_{i,j} indique le j ème message signé par Ai.

L'invention va être mieux comprise par la lecture de la description qui va suivre et en regard des dessins annexés. Ces indications ne sont en aucun cas limitatives de l'invention. Sur les dessins :
- la figure 1 décrit un schéma fonctionnel d'un dispositif communiquant Ai selon le système de la présente invention;
- la figure 2 décrit un schéma fonctionnel d'un dispositif de vérification centralisé B selon le système de la présente invention;
- la figure 3 représente les données transmises des dispositifs Aᵢ vers le dispositif B;

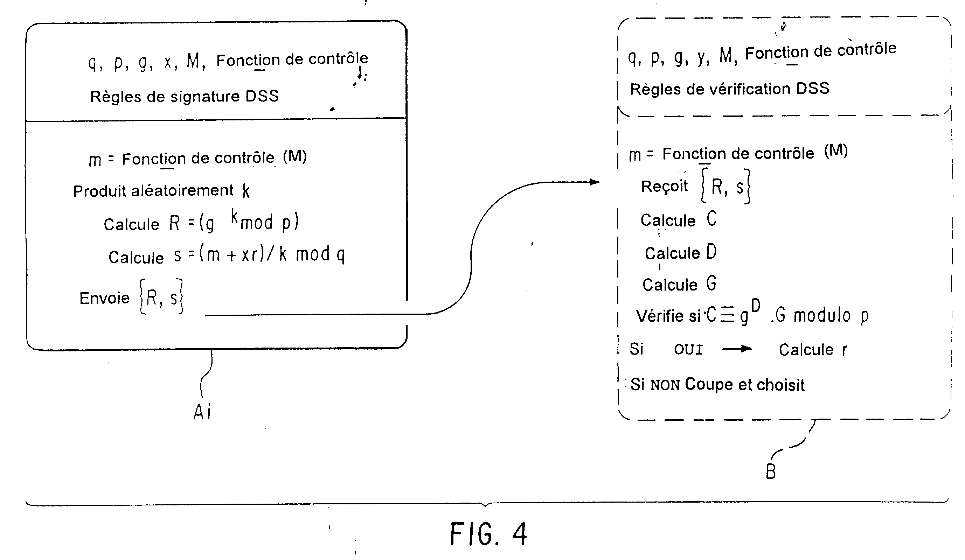

- la figure 4 est un organigramme représentant les étapes des opérations DSS normales entre le dispositif de signature Ai et un dispositif de vérification B.

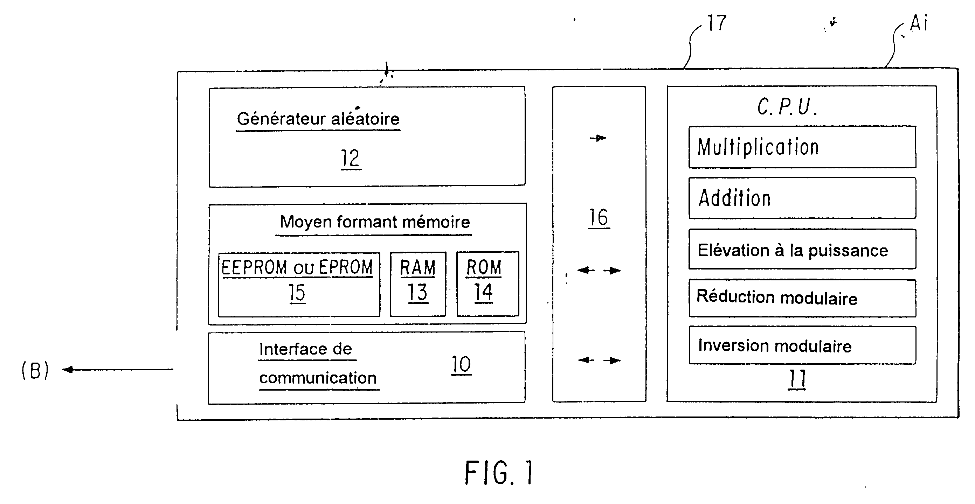

Selon l'invention, à la figure 1, chaque appareil Ai comprend une unité centrale de traitement (CPU) 11, une interface de communication 10, un générateur de nombre aléatoire ou pseudo-aléatoire 12, une Mémoire à Accès Direct (RAM) 13 et/ou une Mémoire à lecture Seule (ROM) 14 et/ou une Mémoire Programmable (éventuellement Effaçable) Electriquement (EPROM ou EEPROM) 15.

La CPU et/ou la ROM comprend des programmes ou des ressources de calcul correspondant à, ou réalisant, la partie production de signature du protocole DSS (règles et fonction de contrôle), la multiplication, l'addition, l'élévation à la puissance et la réduction et l'inversion modulaires. Certaines de ces opérations peuvent être fusionnées (par exemple, la réduction modulaire peut être intégrée directement dans la multiplication).

Comme pour la réalisation du DSS, la RAM comprend classiquement le fichier M sur lequel la fonction de contrôle et les règles de production de signature DSS sont successivement appliquées. L'EPROM (ou EEPROM) 15 contient les valeurs des paramètres : p, q, g, xᵢ qui sont utilisés tandis que k_{i,j} est produit à la transaction j. Ces valeurs sont utilisées comme expliqué dans la suite de la description.

La CPU 11 pilote, par l'intermédiaire d'un bus d'adressage et de commande de données 16, l'interface de communication 10, les opérations de lecture et d'écriture dans les mémoires 13, 14, 15, et obtient des nombres aléatoires en provenance du générateur de nombres aléatoires 12.

Chaque appareil Ai est protégé de l'environnement extérieur par un moyen de protection physique 17. Cette protection devrait être suffisante pour empêcher toute entité non autorisée d'arriver à accéder à la clé secrète xᵢ stockée dans la ROM 14. Aujourd'hui, les techniques les plus répandues, pour mener à bien cette mission, sont l'encapsulation de la puce dans un module de sécurité et la mise en place au niveau de la puce, par exemple, de détecteurs de lumière, de température, de tension anormale et de fréquence d'horloge anormale.

Des considérations particulières de conception, telles que le brouillage de la topographie mémoire, sont également couramment utilisées.

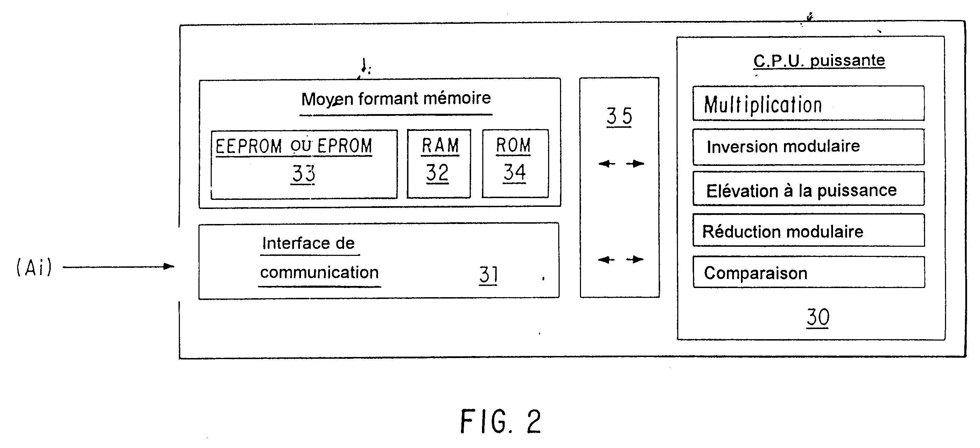

Le dispositif B, de la figure 2, comprend au moins : une unité centrale de traitement (CPU) 30 et un moyen formant mémoire 32 (RAM) et/ou 33 (EEPROM ou EPROM) et/ou 34 (ROM). La CPU 30 pilote, par l'intermédiaire d'un bus d'adressage et de commande de données 35, une interface de communication 31, et des opérations de lecture et d'écriture dans les mémoires 32, 33 et 34. La CPU 30 et/ou la ROM du dispositif B comprend des programmes ou des ressources de calcul correspondant à, ou réalisant, la partie vérification de signature du protocole DSS (règles et fonction de contrôle), la multiplication, l'inversion modulaire, la comparaison, l'élévation à la puissance et la réduction modulaire. Certaines de ces opérations peuvent être fusionnées (par exemple, la réduction modulaire peut être intégrée dans la multiplication).

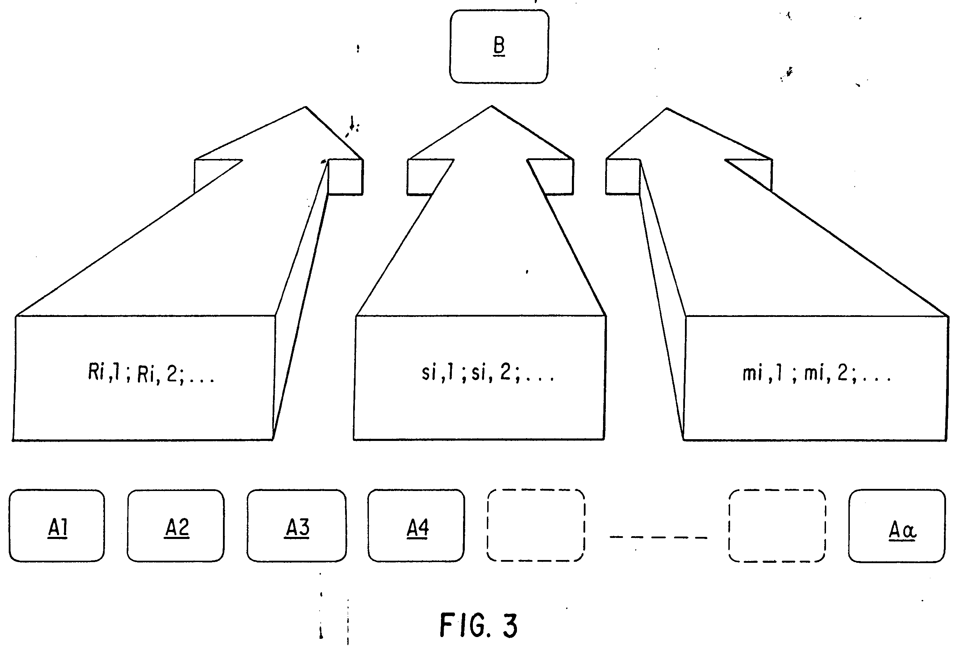

Dans le procédé de l'invention, la vérification par lots de signatures est menée à bien en échangeant au moins les données suivantes, comme le montre la figure 3, entre les dispositifs de signature A1, A2, ..., et le dispositif de vérification B représentés sur les figures 1 et 2. Pour signer un message m_{i,j}, un dispositif Ai prend un nombre aléatoire k_{i,j}, calcule et envoie au dispositif B les données R_{i,j}, s_{i,j} où ${\text{R}}_{\text{i,j}} {\text{= g}}^{\text{k}} \text{i,j modulo p}$ (dans ce cas, il n'y a plus de modulo q) et${\text{s}}_{\text{i,j}} {\text{= ((m}}_{\text{i,j}} {\text{+ x}}_{\text{i}} {\text{r}}_{\text{i,j}} {\text{) / (k}}_{\text{i,j}} \text{)) modulo q}$ Il peut envoyer aussi un code yᵢ s'il y a beaucoup de groupes d'utilisateurs différenciés par leurs clés publiques yᵢ. Ainsi, à chaque envoi, m_{i,j}, R_{i,j}, s_{i,j} et éventuellement j (le nombre de signatures faites par le dispositif Aᵢ), yᵢ, q, p et g sont envoyés. Bien sûr, une identification du dispositif Ai est envoyée. Elle peut être envoyée avant ou après l'envoi de m_{i,j}, R_{i,j}, s_{i,j}. La clé yᵢ et les modules p q et g peuvent aussi être, de préférence, extraits par le dispositif B à partir d'une table de correspondance mémorisée dans la mémoire 33 débutant à partir d'une identification reçue du dispositif Ai.

Une fois qu'un nombre assez grand d'ensemble de couples R_{i,j}, s_{i,j} a été reçu par le dispositif B (par exemple un millier de couples), ce dispositif vérifie par lots tous les couples selon l'invention en vérifiant dans un premier test si${\text{C ≡ g}}^{\text{D}} \text{.G modulo p.}$

Ce premier test est mené à bien en calculant premièrement les traitements C, D et G, où

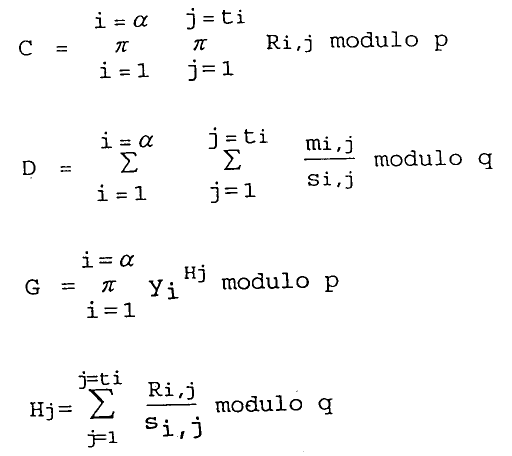

Où π signifie une multiplication faite sur tous les R_{i,j} reçus, Σ signifiant la sommation.

Cela signifie que les traitements précédents des messages reçus et des signatures sont exécutés avant vérification. Ces traitements ont pour objectif de réduire le nombre final d'élévations à la puissance qui seraient normalement à exécuter par le dispositif de vérification et qui consommerait beaucoup de temps. En fait, C et D sont seulement des multiplications qui sont moins consommatrices de temps que les élévations à la puissance. Ensuite, pour calculer G, tous les couples attachés à la même clé publique yᵢ sont, de préférence, recueillis pour le calcul de Hⱼ, par une sommation de divisions (identiques aux multiplications). Ensuite, on effectue seulement autant d'élévations à la puissance, plus une (pour calculer g^{D}), qu'il y a de clés publiques utilisées différentes yᵢ dans la vérification par lots. Le nombre signatures (dans le calcul de v, il y a deux élévations à la puissance).

Afin d'éviter qu'un utilisateur, ayant le droit de signer un message qui a été donné deux fois, n'envoie pas une signature par laquelle il apparaîtrait qu'un même message a été signé deux fois, le dispositif B vérifie aussi, de préférence, dans un autre test, que m_{i,j} est différent de m_{i',j'} si i,j est différent de i',j'. Dans ce mode préférable, j est une renumérotation arbitraire des messages reçus.

Si le premier test est vrai, ou, de préférence, si les deux premier et second tests sont vrais, B accepte toutes les signatures. A l'inverse, si le test échoue, le dispositif B exécute toute recherche d'arborescence (droite) "couper & choisir" pour trouver où sont les fausses signatures. Par exemple, la moitié des couples R_{i,j}, s_{i,j} est vérifiée dans un lot, la seconde moitié étant vérifiée dans un autre lot. Ainsi, il apparaît comme possible d'identifier, pas à pas, simplement les fausse(s) signatures. Pour couper les signatures, un choix peut être fait de toutes les signatures appartenant à une clé publique particulière yᵢ. S'il y a seulement une clé publique y, cette sorte de coupure n'est pas possible mais le calcul de G est plus simple.

Finalement, B convertit les couples R_{i,j} en signatures DSS standard en substituant R_{i,j} par r_{i,j}. Cela est mené à bien en faisant ${\text{r}}_{\text{i,j}} {\text{= R}}_{\text{i,j}} \text{modulo q}$, pour 1 ≤ i ≤ α et pour 1 ≤ j ≤ tᵢ. Pour le reste, l'application peut continuer comme souhaité.

Ainsi, au moyen du procédé de l'invention, le calcul est compensé par une transmission supplémentaire de bits entre les dispositifs de signature et le dispositif de vérification. Cette transmission supplémentaire de bits concerne log₂ (p/q) bits pour chacune des signatures envoyées puisqu'une opération "modulo q" est faite seulement au niveau du dispositif B.

Dans de nombreux dispositifs portables modernes, tels que les cartes à la norme PCMCIA, les ordinateurs portatifs ou les bus de données large bande, ainsi appelés, la communication des données prend un temps négligeable en comparaison de l'effort exigé pour exécuter des élévations à la puissance modulaire et, par conséquent, le procédé inventé offre des possibilités d'échange avantageuses que l'état de la technique antérieure n'offrait pas.

## Revendications

1. Procédé de vérification dans un système comprenant α dispositifs communiquants Ai connectés à un dispositif de vérification centralisé B au moyen d'interfaces de communication :
- chaque dispositif communiquant Ai
- possèdant des moyens de traitement de données (11), des moyens de communication (10), des moyen de mémorisation (13 ; 14 ; 15) et des moyens de production de nombres aléatoires ou pseudo-aléatoires (12),
- exécutant un algorithme de signature numérique et produit un signal de signature numérique, et
- transmettant un signal de signature numérique au dispositif de vérification centralisé B,
- le dispositif de vérification centralisé B
- possèdant des moyens de traitement de données (30), des moyens de communication (31) et des moyens de mémorisation (32 ; 33 ; 34),
- vérifiant, dans un traitement par lots, en même temps, un ensemble comprenant plus d'un élément de signaux de signature numérique, une fois que tous ces signaux de signature numérique ont été reçus, en
- effectuant, premièrement, des traitements sur les signaux de signature numérique reçus et en
- calculant, deuxièmement, sur la base des résultats des traitements, un calcul de vérification,
procédé dans lequel l'algorithme de signature numérique est le DSS et dans lequel l'opération de vérification s'effectue par lots, caractérisé en ce que :
a. le dispositif Ai, pour signer un message j dont la valeur est m_{i,j},
- prend un nombre aléatoire k_{i,j},
- calcule un couple de données R_{i,j}, s_{i,j} où ${\text{R}}_{\text{i,j}} {\text{= g}}^{\text{k}} \text{i,j modulo p}$ et
${\text{s}}_{\text{i,j}} {\text{= ((m}}_{\text{i,j}} {\text{+ x}}_{\text{i}} {\text{r}}_{\text{i,j}} {\text{) / (k}}_{\text{i,j}} \text{)) modulo q}$,
p étant un premier module tel que ₂L-1 < p < 2^{L} pour 512 ≤ L ≤ 1024 et $\text{L = 64α}$ pour un α quelconque, q étant un second module tel que 2¹⁵⁹ < q < 2¹⁶⁰ et tel que p-1 soit un multiple de q, g étant un nombre tel que ${\text{g = h}}^{\text{(p-1)/q}} \text{modulo p}$, où h est un entier quelconque tel que 1 < h < p-1 et où g est supérieur à 1, xᵢ étant une clé secrète appartenant au dispositif Aᵢ,
- et envoie ce couple au dispositif B, et en ce que :
b. le dispositif B, une fois qu'un ensemble de couples a été reçu, vérifie par lots l'ensemble de couples en vérifiant si :${\text{C ≡ g}}^{\text{D}} \text{.G modulo p.}$ en calculant premièrement les traitements C, D et G, où 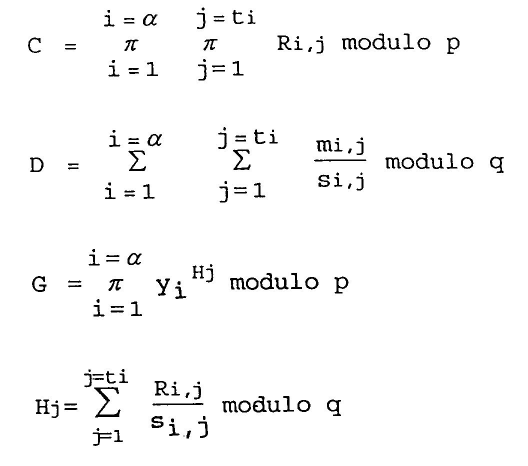
yᵢ étant la clé publique;
r_{i,j} étant la première partie de la signature,
${\text{r}}_{\text{i,j}} {\text{= (g}}^{\text{k}} \text{i,j modp) mod q}$;
s_{i,j} étant la deuxième partie de la signature;
tᵢ étant le nombre de signatures DSS à vérifier;
c. si le test est vrai, B accepte toutes les signatures.

2. Procédé selon la revendication 1, caractérisé en ce que, si le test échoue, B exécute une recherche arborescente, par couper et choisir, pour trouver où sont les fausses signatures.

3. Procédé selon la revendication 1, caractérisé en ce que B convertit les couples en signatures DSS standard en substituant R_{i,j} par ${\text{r}}_{\text{i,j}} {\text{= R}}_{\text{i,j}} \text{modulo q}$.

4. Procédé selon la revendication 2, caractérisé en ce que B convertit les couples en signatures DSS standard en substituant R_{i,j} par ${\text{r}}_{\text{i,j}} {\text{= R}}_{\text{i,j}} \text{modulo q}$.

5. Procédé selon la revendication 2, caractérisé en ce que le procédé de couper et choisir comprend la collecte des messages correspondant à la même clé publique yᵢ.

6. Procédé selon la revendication 4, caractérisé en ce que le procédé de couper et choisir comprend la collecte des messages correspondant à la même clé publique yᵢ.

## Claims

1. A verification method in a system comprising α communicating devices Ai connected to a centralised verification device B by means of communication interfaces:
- each communicating device Ai
- having data processing means (11), communication means (10), storage means (13; 14; 15) and means of producing random or pseudo-random numbers (12),
- executing a digital signature algorithm and producing a digital signature signal, and
- transmitting a digital signature signal to the centralised verification device B,
- the centralised verification device B
- having data processing means (30), communication means (31) and storage means (32; 33; 34),
- verifying, in a processing by batches, at the same time, a set comprising more than one element of digital signature signals, once all these digital signature signals have been received, by
- effecting, first of all, processings on the digital signature signals received, and by
first of all calculating the processing C, D, G, where 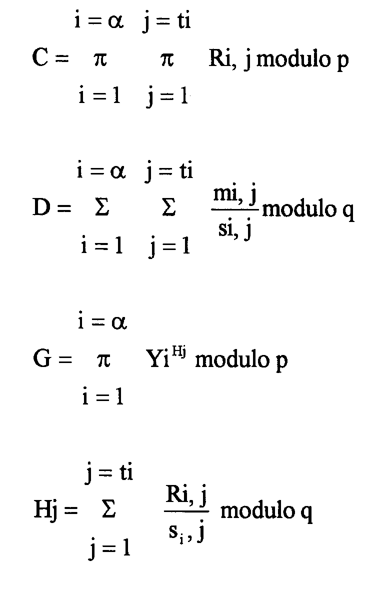
yᵢ being the public key;
r_{i,j} being the first part of the signature,
${\text{r}}_{\text{i,j}} {\text{= (g}}^{\text{k}} \text{i,j modp) mod q}$;
s_{i,j} being the second part of the signature;
tᵢ being the number of DSS signatures to verify;
c. if the test is true, B accepts all the signatures.

2. A method according to Claim 1, characterised in that, if the test fails, B executes a tree search, by cut and choose, in order to find where the false signatures are.

3. A method according to Claim 1, characterised in that B converts the pairs into standard DSS signatures by substituting ${\text{r}}_{\text{i,j}} {\text{= R}}_{\text{i,j}}$ modulo q for R_{i,j}.

4. A method according to Claim 2, characterised in that B converts the pairs into standard DSS signatures by substituting ${\text{r}}_{\text{i,j}} {\text{= R}}_{\text{i,j}}$ modulo g for R_{i,j}.

5. A method according to Claim 2, characterised in that the method by cut and choose comprises collecting messages corresponding to the same public key yᵢ.

6. A method according to Claim 4, characterised in that the method by cut and choose comprises the collection of messages corresponding to the same public key yᵢ.

## Patentansprüche

1. Prüfverfahren in einem System mit α Übertragungsvorrichtungen, die über Kommunikationsschnitt-stellen an eine zentralisierte Prüfvorrichtung B angeschlossen sind :
- wobei jede Übertragungsvorrichtung Ai
- Datenverarbeitungsmittel (11), Kommunikationsmittel (10), Speichermittel (13 ; 14 ; 15) und Erzeugungsmittel von Zufalls- oder Pseudo-Zufallszahlen (12) besitzt,
- einen digitalen Unterschriftsalgorithmus ausführt und ein digitales Unterschriftssignal erzeugt, und
- ein digitales Unterschriftssignal an die zentralisierte Prüfvorrichtung B überträgt,
- wobei die zentralisierte Prüfvorrichtung B
- Datenverarbeitungsmittel (30), Kommunikationsmittel (31) und Speichermittel (32 ; 33 ; 34) besitzt,
- bei einer losweisen Verarbeitung gleichzeitig eine Gruppe mit mehr als einem digitalen Unterschriftssignal prüft, nachdem alle diese digitalen Unterschriftssignale empfangen wurden, indem sie
- erstens Verarbeitungen an den empfangenen digitalen Unterschriftssignalen durchführt und indem sie erstens die Verarbeitungen C, D, und C berechnet, wo 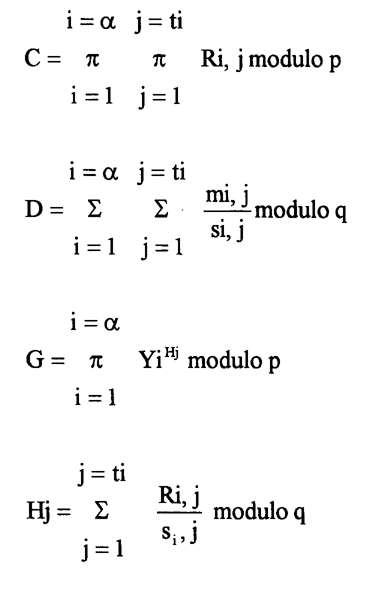 wobei
yᵢ der öffentliche Schlüssel ist ;
rᵢ, j der erste Teil der Unterschrift ist ;
rᵢ, j* (g^{k}i, j modp) mod q ist ;
sᵢ, j der zweite Teil der Unterschrift ist ;
tᵢ die Anzahl der zu prüfenden DSS-Unterschriften ist ;
c. wenn der Test richtig ist, B alle Unterschriften akzeptiert.

2. Verfahren nach Anspruch 1, dadurch gekennzeichnet, dass wenn der Test misslungen ist, B eine arboreszente Suche per Ausscheiden und Wählen durchführt, um zu finden, wo die falschen Unterschriften sind.

3. Verfahren nach Anspruch 1, dadurch gekennzeichnet, dass B die Paare in DSS-Standard-Unterschriften verwandelt, durch Ersetzen von R_{i,j} durch ${\text{r}}_{\text{i,j}} {\text{= R}}_{\text{i,j}} \text{Modul q}$.

4. Verfahren nach Anspruch 2, dadurch gekennzeichnet, dass B die Paare in DSS-Standard-Unterschriften verwandelt, durch Ersetzen von R_{i,j} dur ${\text{r}}_{\text{i,j}} {\text{= R}}_{\text{i,j}} \text{Modul q}$.

5. Verfahren nach Anspruch 2, dadurch gekennzeichnet, dass das Verfahren Ausscheiden und Wählen das Sammeln der Meldungen umfasst, die dem gleichen öffentlichen Schlüssel yᵢ entsprechen.

6. Verfahren nach Anspruch 4, dadurch gekennzeichnet, dass das Verfahren Ausscheiden und Wählen das Sammeln der Meldungen umfasst, die dem gleichen öffentlichen Schlüssel yᵢ entsprechen.
